# EUROPÄISCHE PATENTSCHRIFT

(11) **EP 2 255 136 B1**
(45) Veröffentlichungstag und Bekanntmachung des Hinweises auf die Patenterteilung: **22.05.2013**
(21) Anmeldenummer: 09712728.6
(22) Anmeldetag: 18.02.2009
(51) Int. Cl.: F24J 2/46, F24J 2/10

(54) **CONTAINER UND SONNENSTROMKRAFTWERK**
CONTAINER AND SOLAR-GENERATED POWER PLANT
CONTENEUR ET CENTRALE SOLAIRE

(30) Priorität: 21.02.2008 DE 102008010314
(43) Veröffentlichungstag der Anmeldung: 01.12.2010
(73) Patentinhaber: Gerbracht, Heiner, 49090 Osnabrück (DE)
(72) Erfinder: Gerbracht, Heiner, 49090 Osnabrück (DE)
(74) Vertreter: Dantz, Jan Henning
(86) Internationale Anmeldenummer: PCT/EP2009/051900
(87) Internationale Veröffentlichungsnummer: WO 2009/103726

(56) Entgegenhaltungen:
- EP-A- 1 541 931
- WO-A-94/20802
- WO-A-03/008803
- DE-A1- 19 952 276
- FR-A- 2 628 510
- IT-U- TO20 070 088
- US-A- 4 138 994
- US-A- 4 273 104
- US-B1- 6 363 928

## Beschreibung

Die vorliegende Erfindung betrifft einen Container mit mindestens zwei abnehmbaren Seitenwänden und einem Gestell, an dem mindestens eine fluidführende Leitung gehalten ist, sowie ein Sonnenstromkraftwerk.

Es gibt Sonnenstromkraftwerke, bei denen durch Konzentration der direkten Sonnenstrahlung hohe Temperaturen in einem bestimmten Bereich erzeugt werden können, wobei die konzentrierte Wärmestrahlung meist zur Erzeugung von Dampf eingesetzt wird, der dann in geeigneten Turbinen oder Dampfmotoren in eine Drehbewegung gewandelt wird, mittels der wiederum elektrische Energie erzeugt wird. Insbesondere in Regionen mit viel Sonnenlicht können solche Sonnenstromkraftwerke gut eingesetzt werden. Dabei besteht bei den bisherigen Sonnenstromkraftwerken das Problem, dass lange Montagezeiten notwendig sind und bei der Aufstellung des Sonnenstromkraftwerkes eine hohe Genauigkeit erforderlich ist. Entsprechend muss das Gelände vorbereitet werden und eine entsprechende Ausrichtung der notwendigen Spiegel und Leitungen erfolgen. Ein solches Sonnenstromkraftwerk ist auch vergleichsweise anfällig für Schwingungen und gegenüber Wind.

Die IT TO20 070 088 U offenbart eine Anlage zur Nutzung von Solarenergie, bei der an einem Gestell ein Rohrkollektor und ein Parabolkörper gehalten sind. Unter dem Parabolkörper sind in einem Container die Module zum Betrieb der Solaranlage angeordnet, insbesondere ein Tank und eine Turbine. Der Tank dient dabei zur Speicherung von Wärmeenergie, die durch den Rohrkollektor bereitgestellt wird.

Es ist daher Aufgabe der vorliegenden Erfindung einen Container bzw. ein Sonnenstromkraftwerk zu schaffen, das sich leicht montieren lässt und auch in unwegsamem Gelände die Montagezeit verkürzt ist.

Diese Aufgabe wird mit einem Container mit den Merkmalen des Anspruches 1 sowie einem Sonnenstromkraftwerk mit den Merkmalen des Anspruches 8 gelöst. Erfindungsgemäß umfasst der Container mindestens zwei abnehmbare Seitenwände und ein Gestell, an dem mindestens eine fluidführende Leitung gehalten ist, wobei an dem Gestell mehrere Spiegel montiert sind, um die fluidführende Leitung mittels reflektiertem Sonnenlicht zu erwärmen. Dadurch kann der Container ein Bestandteil eines Sonnenstromkraftwerkes bilden, wobei der Container sich auf einfache Weise transportieren und aufstellen lässt. Ein solcher Container bildet einen genormten Großraumbehälter (ISO 668) und kann auf dem See- oder Landweg auf einfache Weise transportiert werden, wobei eine Aufstellung des Containers auch in entfernten Regionen möglich ist. In dem Container können dabei die Bestandteile des Sonnenstromkraftwerkes vormontiert angeordnet sein, so dass eine schnelle Montage der Bestandteile des Sonnenstromkraftwerkes möglich ist, und auch angelerntes Personal vor Ort die Montage durchführen kann. Zudem kann ein entsprechender Container leicht ausgetauscht werden.

Gemäß der Erfindung sind die Spiegel über Gelenke miteinander verbunden und aus- bzw. zusammenklappbar an dem Gestell des Containers gehalten. Dadurch können die Spiegel für den Transport sicher gelagert werden aber für ein Aufstellen können die Spiegel entsprechend ausgeklappt oder verschoben werden, damit eine entsprechende Reflektion des Sonnenlichtes auf die fluidführende Leitung erfolgen kann. Die fluidführende Leitung ist dabei vorzugsweise als Dampferzeugungsrohr ausgebildet.

Für einen einfachen Transport umfasst der Container Eckelemente (cornercastings), an denen der Container durch Hebezeuge aufhängbar ist. Dadurch kann auch ein Verladen des vorbereiteten Containers auf einfache Weise erfolgen.

Um bei dem aufgestellten Container die Bündelung des Sonnenlichtes zu optimieren, können die Spiegel über einen Antrieb verstellbar an dem Gestell gehalten sein. Die Verstellung kann dabei über einzelne Elektromotoren, vorzugsweise Schrittmotoren erfolgen. Dadurch kann bei Änderung des Lichteinfalls des Sonnenlichtes eine entsprechende Ausrichtung der Spiegel über den Antrieb erfolgen. Vorzugsweise ist oberhalb der fluidführenden Leitungen zusätzlich ein Sekundärreflektor angeordnet, so dass auch nach oben abgestrahltes Sonnenlicht nochmals reflektiert wird.

Für eine sichere Aufstellung kann die fluidführende Leitung über ein oder mehrere Spannelemente fixiert sein, wobei eine solche Montage der Spannelemente auf einfache Weise schnell erfolgen kann.

Um die Absorption des Sonnenlichtes zu optimieren, kann die fluidführende Leitung zu einer mittleren Längsebene des Containers asymmetrisch ausgerichtet sein. Je nachdem wie der zu erwartende Lichteinfall ausgestaltet ist, kann dadurch die Strahlungsausbeute verbessert werden.

Erfindungsgemäß wird auch ein Sonnenstromkraftwerk bereitgestellt, das mehrere Container umfasst, deren fluidführende Leitungen miteinander verbunden sind. Dadurch kann das Sonnenstromkraftmerk modulartig aufgebaut werden, wobei das komplette Sonnenstromkraftwerk in genormten Frachtcontainem an die gewünschte Stelle transportiert werden kann.

Gemäß einer bevorzugten Ausgestaltung des Sonnestromkraftwerkes sind die fluidführenden Leitungen mit einer Dampfturbine oder einem Dampfmotor verbunden, die ebenfalls in einem Container montiert sein kann. Zudem kann in einem weiteren Container eine Kondensationseinheit angeordnet sein. Statt der Erzeugung von Dampf kann als Fluid auch ein Thermoöl eingesetzt werden.

Um die Wärmeenergie bei Bedarf speichern zu können, kann das Sonnenstromkraftwerk auch einen Wärmespeicher umfassen.

Bei der Aufstellung des Sonnenstromkraftwerkes in küstennahen Regionen, kann die Abwärme des Sonnenstromkraftwerkes auch eine Wasserentsalzungseinheit betreiben.

Die Erfindung wird nachfolgend anhand mehrerer Ausführungsbeispiele mit Bezug auf die beigefügten Zeichnungen näher erläutert. Es zeigen:

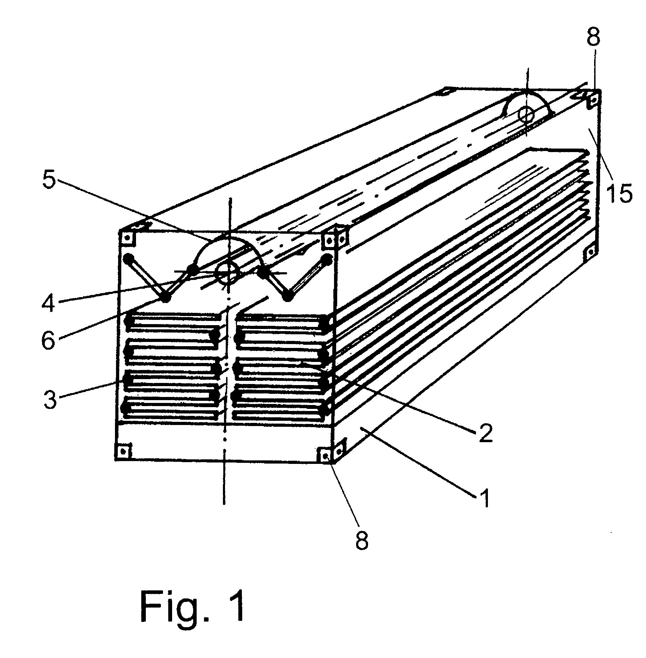

- Figur 1: eine perspektivische Ansicht eines erfindungsgemäßen Containers;
- Figur 2: eine Ansicht des Containers der Figur 1 in der montierten Position;
- Figur 3: eine schematische Ansicht eines Sonnenstromkraftwerkes mit mehreren Containern; und
- Figur 4: eine Seitenansicht eines Containers mit modifizierten Gelenkarmen.

Ein Container 1 ist als genormter Frachtcontainer ausgebildet und umfasst an den acht Ecken Eckelemente 8, mittels denen ein Verladen über Kräne und andere Hebezeuge möglich ist. Der Container 1 besitzt zumindest zwei abnelunbare Seitenwände 15, die für den Transport an dem Gestell des Containers 1 gehalten sind und sich dann zumindest teilweise demontieren lassen.

In dem Container 1 sind mehrere Spiegel 2 zusammengeklappt angeordnet und für den Transport fixiert. Die Spiegel 2 sind über Gelenke 3 miteinander verbunden und vorzugsweise als Linear-Fresnel-Spiegel ausgebildet. Die Spiegel 2 können leicht konkav gekrümmt ausgebildet sein, um eine bessere Fokussierung auf eine Fluid führende Leitung 4 zu erreichen.

In einem oberen Bereich des Containers 1 ist eine Leitung 4 in Form eines Dampferzeugerrohres vorgesehen, vorzugsweise ein schwarz beschichtetes Stahlrohr, das benachbart zu einem im Querschnitt nahezu halbkreisförmigen Sekundärreflektor 5 angeordnet ist. Der Sekundärreflektor 5 sowie die Leitung 4 sind an Gelenkarmen 6 in dem Container 1 gehalten. Der genormte Container 1 besitzt dabei eine Höhe von etwa 2,40m, wobei die Gelenkarme 6 in der eingefalteten Position in dem Innenraum des Containers 1 angeordnet sind.

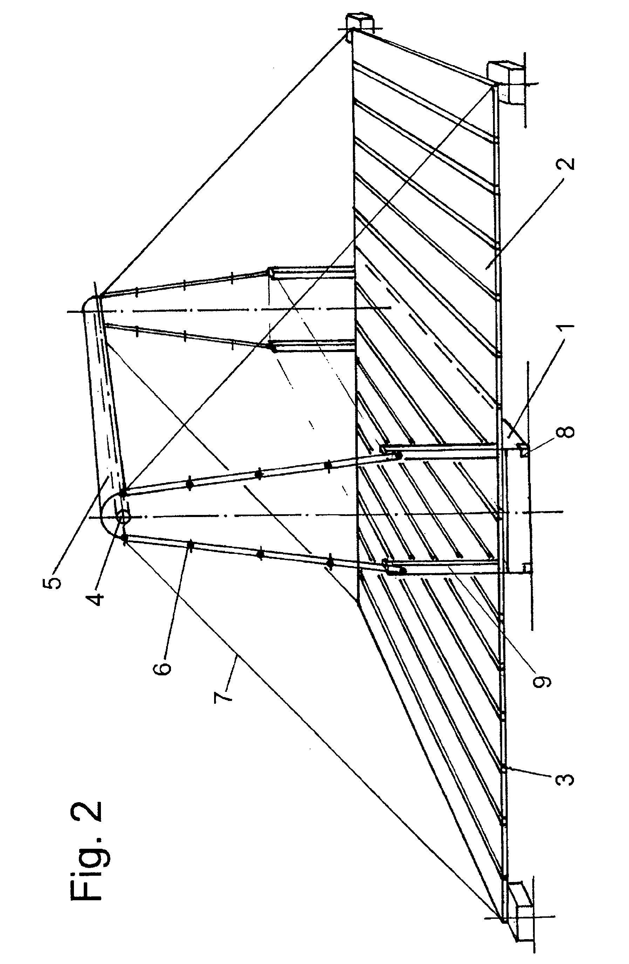

In Figur 2 ist der Container 1 in der demontierten Position gezeigt, bei der die Seitenwände 15 entfernt sind. Ein durch Balken 9 gebildetes Gestell dient zur Festlegung der fluidführenden Leitung 4, die an den Gelenkarmen 6 montiert ist, die mit den Balken 9 verbunden sind. Durch das Ausklappen bzw. Ausfalten der Gelenkarme 6 wird die Leitung 4 auf einer Höhe von etwa 6 bis 10m positioniert. Durch das Eigengewicht des Gestells des Containers lässt sich dieses gut ebenerdig aufstellen. An dem Gestell 8 sind mehrere leistenförmige Spiegel 2 ausgeklappt, die von oben auftreffendes Sonnenlicht reflektieren, damit dieses auf die fluidfülrende Leitung 4 abstrahlt. Etwaige Abstrahlungen des Sonnenlichtes neben die Leitung 4 können durch den Sekundärreflektor 5 wieder auf die Leitung 4 reflektiert werden. Um die Stabilität der Konstruktion zu erhöhen, sind mehrere bodenseitig verankerte Spannseile 7 vorgesehen, die die Leitung 4 fixieren.

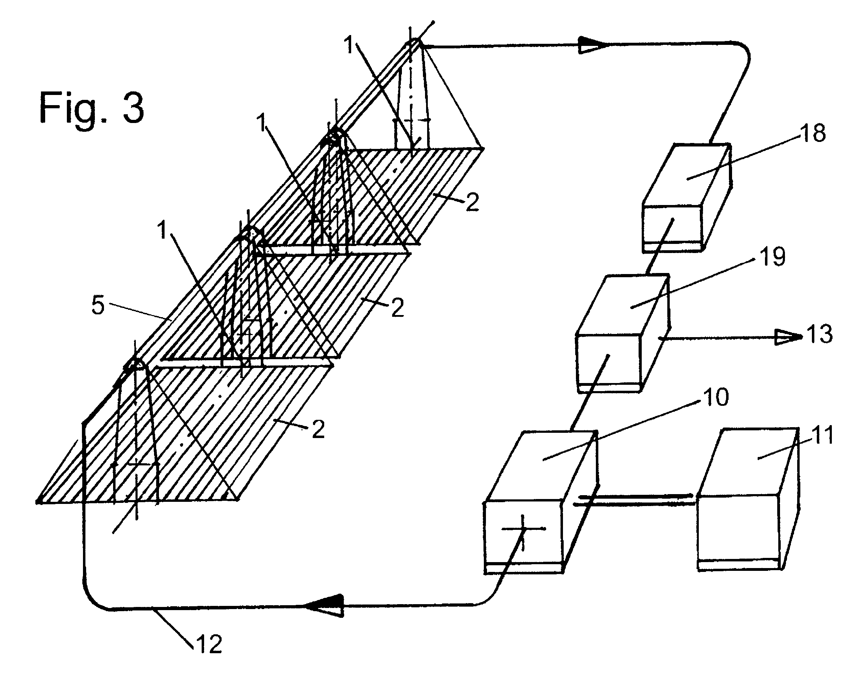

In Figur 3 wurden mehrere Container 1 zu einem Sonnenstromkraftwerk zusammengesetzt. Dabei wurden mehrere Container 1 nebeneinander angeordnet, wobei die fluidführende Leitung 4 jeweils miteinander verbunden wurde. Um den Kreislauf zu schließen, wurde eine Verbindungsleitung 12 vorgesehen, die mit weiteren Modulen verbunden ist. So ist in dem Sonnenstromkraftwerk ein Container 18 mit einem Wärmespeicher vorgesehen, so dass die Sonnenenergie auch über ein geeignetes Speichermedium gespeichert werden kann. In einem weiteren Container 19 ist eine Dampfturbine vorgesehen, mittels der elektrische Energie erzeugt werden kann. Hierfür wird der erwärmte Dampf aus den fluidführenden Leitungen 4 bzw. dem Wärmespeicher 18 entspannt, wodurch elektrische Energie erzeugt wird, wie dies mit dem Pfeil 13 dargestellt ist.

Hinter dem Container 19 mit der Dampfturbine ist eine Kondensationseinheit 10 in einem Container untergebracht, die zur Verflüssigung des Fluides dient, das dann wieder zu den fluidführenden Leitungen 4 gepumpt werden kann. Der Container 10 mit der Kondensationseinheit ist ferner mit einem Container 11 mit einer Wasserentsalzungseinheit verbunden, so dass in küstennahen Regionen auch eine Wasserentsalzung stattfinden kann.

Das in Figur 3 dargestellte Sonnenstromkraftwerk ist nur schematisch gezeigt. Es ist natürlich möglich, mehrere Container 1 vorzusehen, die eine meanderartige Führung eines Fluids ermöglichen, so dass auch die Strahlungsausbeute durch benachbarte führende Leitungen 4 und entsprechende Spiegel 2 erhöht werden kann. Die Container 1 können dabei in Reihe oder parallel geschaltet sein, wobei eine Parallele Anordnung mehrerer Container 1 den Volumenstrom durch das Sonnenstromkraftwerk erhöht.

Zudem ist es möglich, dass die fluidführende Leitung 4 nicht symmetrisch in einer Mittelebene des Containers 1 angeordnet ist, sondern außermittig, um die Strahlungsausbeute zu erhöhen.

Das aus einzelnen Containern zusammengesetzte Sonnenstromkraftwerk lässt sich auch in entfernt liegenden Gebieten einfach und schnell montieren, wobei sämtliche Bauteile zum Betrieb des Sonnenstromkraftwerkes in entsprechenden Containern angeliefert werden können.

Bei dem Sonnenstromkraftwerk können die Spiegel 2 über einen Motor angetrieben sein, damit entsprechend der Ausrichtung der Sonnenstrahlen diese optimal zu der fluidführenden Leitung 4 geführt werden können. Ferner ist es möglich, durch nach unten angebrachte Wasserstrahldüsen eine vollautomatisch Spiegelreinigung zu ermöglichen. Die Spiegel 2 können auch gekrümmt ausgebildet sein, um eine bessere Fokussierung auf die fluidführende Leitung 4 zu ermöglichen.

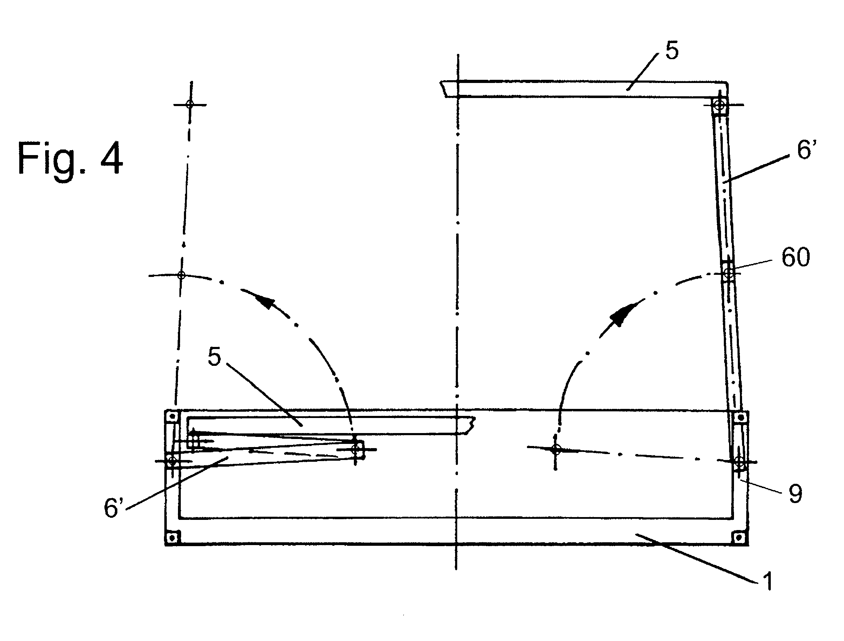

In dem dargestellten Ausführungsbeispiel ist die Leitung 4 über Gelenkarme 6 gehalten, deren Gelenkachse parallel zu der Leitung 4 verläuft. In der Figur 4 ist eine modifizierte Ausgestaltung eines Containers 1 gezeigt, bei dem Gelenkarme 6' jeweils an einem Pfosten 9 des Containers 1 drehbar gelagert sind. Es sind insgesamt zwei Gelenkarme 6' miteinander verbunden, deren Drehachsen 60 horizontal und senkrecht zu der Leitung 4 ausgerichtet sind. Dadurch kann die Leitung 4 und der wannenförmige Sekundärreflektor 5 vormontiert an den Gelenkarmen 6' montiert werden, so dass für den Transport die Gelenkarme 6' mit dem Sekundärreflektor 5 innerhalb des Containers 1 zusammengeklappt angeordnet sind, wie dies auf der linken Seite der Figur 4 dargestellt ist. Für die Aufstellung werden die Gelenkarme 6' nach oben geklappt und fixiert, so wie dies auf der rechten Seite der Figur 4 dargestellt ist. Dadurch kann die Leitung 4 besonders hoch angeordnet werden, wodurch die gegenseitige Spiegelsegmentverschattung minimiert wird.

In einer weiteren Ausgestaltung weist jeder Container 1 einen Kompensator zur Aufnahme der Längendehnung der Leitung 4 auf. Dadurch sollen Wärmespannungen durch Temperaturunterschiede reduziert werden.

## Patentansprüche

1. Container (1), mit mindestens zwei abnehmbaren Seitenwänden (15) und einem Gestell (9), an dem mindestens eine fluidführende Leitung (4) gehalten ist, wobei an dem Gestell (9) mehrere Spiegel (2) montiert sind, um die eine fluidführende Leitung (4) mittels reflektiertem Sonnenlicht zu erwärmen, **dadurch gekennzeichnet, dass** die Spiegel (2) über Gelenke (3) miteinander verbunden und aus- bzw. zusammenklappbar an dem Gestell (9) gehalten sind, wobei mehrere Spiegel (2) in dem Container (1) zusammengeklappt angeordnet und für den Transport fixiert werden können.

2. Container nach Anspruch 1, **dadurch gekennzeichnet, dass** die fluidführende Leitung (4) als Dampferzeugungsrohr ausgebildet ist.

3. Container nach Anspruch 1 oder 2, **dadurch gekennzeichnet, dass** das Gestell des Containers Ecken (8) aufweist, an denen der Container (1) durch Hebezeuge aufhängbar ist.

4. Container nach einem der Ansprüche 1 bis 3, **dadurch gekennzeichnet, dass** die Spiegel (2) über einen Antrieb verstellbar an dem Gestell (9) gehalten sind.

5. Container nach einem der Ansprüche 1 bis 4, **dadurch gekennzeichnet, dass** oberhalb der fluidführenden Leitung (4) ein Sekundärreflektor (5) angeordnet ist.

6. Container nach einem der Ansprüche 1 bis 5, **dadurch gekennzeichnet, dass** die fluidführende Leitung (4) über ein oder mehrere Spannelemente (7) fixiert ist.

7. Container nach einem der Ansprüche 1 bis 6, **dadurch gekennzeichnet, dass** die fluidführende Leitung (4) zu einer mittleren Längsebene des Containers (1) asymmetrisch ausgerichtet ist.

8. Sonnenstromkraftwerk, umfassend mehrere Container (1) nach einem der vorhergehenden Ansprüche, deren fluidführende Leitungen (4) miteinander verbunden sind.

9. Sonnenstromkraftwerk nach Anspruch 8, **dadurch gekennzeichnet, dass** zwischen zwei fluidführenden Leitungen (4) ein Kompensator oder ein Dehnungsbogen angeordnet ist.

10. Sonnenstromkraftwerk nach Anspruch 8 oder 9, **dadurch gekennzeichnet, dass** das Sonnenstromkraftwerk eine mit den fluidführenden Leitungen (4) verbundene Dampfturbine (19) oder einen Dampfmotor umfasst.

11. Sonnenstromkraftwerk nach einem der Ansprüche 8 bis 10, **dadurch gekennzeichnet, dass** das Sonnenstromkraftwerk eine Kondensationseinheit (10) umfasst.

12. Sonnenstromkraftwerk nach einem der Ansprüche 8 bis 11, **dadurch gekennzeichnet, dass** das Sonnenstromkraftwerk einen Wärmespeicher (18) umfasst.

13. Sonnenstromkraftwerk nach einem der Ansprüche 8 bis 12, **dadurch gekennzeichnet, dass** das Sonnenstromkraftwerk eine Wasserentsalzungseinheit (11) umfasst.

14. Sonnenstromkraftwerk nach einem der Ansprüche 8 bis 13, **dadurch gekennzeichnet, dass** die Container (1) parallel und/oder in Reihe geschaltet sind.

## Claims

1. Container (1) with at least two removable side walls (15) and a frame (9) on which at least one fluid-conducting line (4) is held, wherein a plurality of mirrors (2) are mounted on the frame (9) in order to heat the one fluid-conducting line (4) by means of reflected sunlight, **characterized in that** the mirrors (2) are held on the frame (9) in a manner connected to one another and so as to be able to be unfolded or folded up via joints (3), wherein a plurality of mirrors (2) can be arranged folded up in the container (1) and can be fixed for transportation.

2. Container according to Claim 1, **characterized in that** the fluid-conducting line (4) is in the form of a steam generation pipe.

3. Container according to Claim 1 or 2, **characterized in that** the frame of the container has corners (8) at which the container (1) is suspendable by means of hoists.

4. Container according to one of Claims 1 to 3, **characterized in that** the mirrors (2) are held on the frame (9) so as to be adjustable via a drive.

5. Container according to one of Claims 1 to 4, **characterized in that** a secondary reflector (5) is arranged above the fluid-conducting line (4).

6. Container according to one of Claims 1 to 5, **characterized in that** the fluid-conducting line (4) is fixed via one or more clamping elements (7).

7. Container according to one of Claims 1 to 6, **characterized in that** the fluid-conducting line (4) is oriented asymmetrically to a central longitudinal plane of the container (1).

8. Solar-generated power plant comprising a plurality of containers (1) according to one of the preceding claims, the fluid-conducting lines (4) of which are connected to one another.

9. Solar-generated power plant according to Claim 8, **characterized in that** a compensator or an expansion bend is arranged between two fluid-conducting lines (4).

10. Solar-generated power plant according to Claim 8 or 9, **characterized in that** the solar-generated power plant comprises a steam turbine (19) connected to the fluid-conducting lines (4), or a steam motor.

11. Solar-generated power plant according to one of Claims 8 to 10, **characterized in that** the solar-generated power plant comprises a condensation unit (10).

12. Solar-generated power plant according to one of Claims 8 to 11, **characterized in that** the solar-generated power plant comprises a heat accumulator (18).

13. Solar-generated power plant according to one of Claims 8 to 12, **characterized in that** the solar-generated power plant comprises a water demineralization unit (11).

14. Solar-generated power plant according to one of Claims 8 to 13, **characterized in that** the containers (1) are connected in parallel and/or in series.

## Revendications

1. Conteneur (1) avec au moins deux parois latérales (15) amovibles et un bâti (9), sur lequel au moins une conduite contenant du fluide (4) est maintenue, plusieurs miroirs (2) étant montés sur le bâti (9) afin de réchauffer l'une conduite contenant du fluide (4) à l'aide de la lumière solaire réfléchie, **caractérisé en ce que** les miroirs (2) sont reliés entre eux par des articulations (9) et sont maintenus de manière pivotante ou repliable sur le bâti (9), plusieurs miroirs (2) pouvant être disposés de manière repliée dans le conteneur (1) et pouvant être fixés pour le transport.

2. Conteneur selon la revendication 1, **caractérisé en ce que** la conduite contenant du fluide (4) est réalisée comme un tube de production de vapeur.

3. Conteneur selon la revendication 1 ou 2, **caractérisé en ce que** le bâti du conteneur présente des coins (8), sur lesquels peut être suspendu le conteneur (1) par des engins de levage.

4. Conteneur selon l'une quelconque des revendications 1 à 3, **caractérisé en ce que** les miroirs (2) sont maintenus de manière déplaçable par un entraînement sur le bâti (9).

5. Conteneur selon l'une quelconque des revendications 1 à 4, **caractérisé en ce qu'**un réflecteur secondaire (5) est disposé au-dessus de la conduite contenant du fluide (4).

6. Conteneur selon l'une quelconque des revendications 1 à 5, **caractérisé en ce que** la conduite contenant du fluide (4) est fixée par un ou plusieurs éléments de serrage (7).

7. Conteneur selon l'une quelconque des revendications 1 à 6, **caractérisé en ce que** la conduite contenant du fluide (4) est orientée de manière asymétrique par rapport à un plan médian longitudinal du conteneur (1).

8. Centrale solaire comprenant plusieurs conteneurs (1) selon l'une quelconque des revendications précédentes, dont les conduites contenant du fluide (4) sont reliées entre elles.

9. Centrale solaire selon la revendication 8, **caractérisée en ce qu'**un compensateur ou une lyre de dilatation est disposée entre deux conduites contenant du fluide (4).

10. Centrale solaire selon la revendication 8 ou 9, **caractérisée en ce que** la centrale solaire comporte une turbine à vapeur (19) reliée aux conduites contenant du fluide (4) ou un moteur à vapeur.

11. Centrale solaire selon l'une quelconque des revendications 8 à 10, **caractérisée en ce que** la centrale solaire comporte une unité de condensation (10).

12. Centrale solaire selon l'une quelconque des revendications 8 à 11, **caractérisée en ce que** la centrale solaire comporte un réservoir thermique (18).

13. Centrale solaire selon l'une quelconque des revendications 8 à 12, **caractérisée en ce que** la centrale solaire comporte une unité de dessalement d'eau (11).

14. Centrale solaire selon l'une quelconque des revendications 8 à 13, **caractérisée en ce que** les conteneurs (1) sont montés en parallèle et/ou en série.
